# EUROPEAN PATENT APPLICATION

(11) **EP 4 410 627 A1**
(43) Date of publication of application: **07.08.2024**
(21) Application number: 23752279.2
(22) Date of filing: 01.02.2023
(51) Int. Cl.: B60W 60/00, B60W 40/00

(54) **EMPTY SPACE IDENTIFICATION METHOD, VEHICLE, AND READABLE STORAGE MEDIUM**

(30) Priority: 09.02.2022 CN 202210123082
(71) Applicant: Ningbo Lotus Robotics Co., Ltd., Ningbo, Zhejiang 315335 (CN)
(72) Inventor: ZHU, Chenhao, Wuhan, Hubei 430056 (CN); XIAO, Yang, Wuhan, Hubei 430056 (CN); PAN, Jianwei, Wuhan, Hubei 430056 (CN)
(74) Representative: Zaboliene, Reda
(86) International application number: PCT/CN2023/074169
(87) International publication number: WO 2023/151499

(57) **Abstract**

An empty space identification method, which is applied to a vehicle, and comprises: acquiring traffic events around a vehicle; establishing a Bayesian network according to a dependency relationship between the probability of occurrence of a traffic event and the probability of existence of an empty space; calculating the probability of existence of an empty space around the vehicle according to the traffic events and the Bayesian network; and if the probability of existence of an empty space is greater than a preset threshold, determining that an empty space exists. By establishing a dependency relationship between the probabilities of occurrence of different traffic events on the basis of the Bayesian network, and outputting the probability of existence of an available space in a range that the fields of view of sensors of the vehicle cannot reach, the accuracy of empty space identification during autonomous driving is improved.

## Description

### CROSS REFERENCE TO RELATED APPLICATIONS

The present application claims priority of Chinese patent application filed on February 09, 2022, with an application number 202210123082.3 and a title "EMPTY SPACE IDENTIFICATION METHOD, VEHICLE, AND READABLE STORAGE MEDIUM", the entire content of which is incorporated into the present application by reference.

### TECHNICAL FIELD

The present invention relates to the field of autonomous driving technology, in particular to a vacant space identification method, a vehicle, and a readable storage medium.

### BACKGROUND

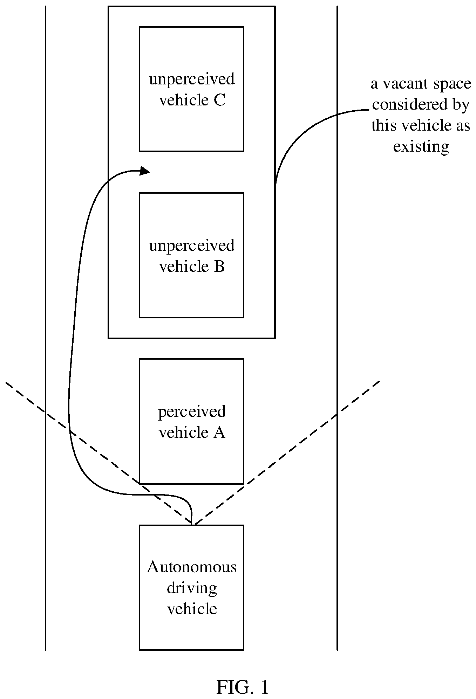

An autonomous driving vehicle relies on various sensors to perceive the surrounding environment during traveling. The perception ability of the sensors depends on their own inherent attributes (field of views/angle of views/perception algorithm recognition ability) on one hand, and also depends on the relative position relationship between obstacles (vehicles/persons, etc.) and the vehicle itself on the other hand. For example, in the case that the road ahead is spacious, the vehicle can see all objects within 100 ahead; but when there is an obstacle vehicle near the front of the vehicle, only the obstacle vehicle can be seen. More obstacle vehicles in the distance are blocked by the obstacle vehicle, and the vehicle cannot "see". The autonomous driving vehicle plans driving paths and perform driving tasks such as lane changing/borrowing based on perceived information. For example, the vehicle in an autonomous driving state perceives a slow or stationary vehicle ahead and identifies that there is a space in the distance, then attempts to overtake by taking a detour. However, environmental information perceived by sensors is inconsistent with the real world, and the autonomous driving vehicle thereby makes incorrect judgments and plans paths that do not conform to human driving experience. As shown in FIG. 1, the vehicle sees an obstacle vehicle A ahead, but sensors fail to see an obstacle vehicle B/C (which can be seen by human eyes), then it considers that there is a vacant space behind A that can be inserted for overtaking by taking a detour. However, humans will not overtake by taking a detour because of seeing B/C, so the path planned by the autonomous driving vehicle does not meet human expectations.

### SUMMARY OF THE DISCLOSURE

In view of this, the present invention provides a vacant space identification method, a vehicle, and a readable storage medium, which can improve accuracy of identifying vacant spaces during autonomous driving.

The present application provides a vacant space identification method applied in a vehicle, comprising: acquiring traffic events around the vehicle; establishing a Bayesian network according to a dependency relationship between a probability of occurrence of a traffic event and a probability of existence of a vacant space; calculating a probability of existence of a vacant space around the vehicle according to the traffic events and the Bayesian network; and if the probability of existence of a vacant space is greater than a preset threshold, determining that a vacant space exists.

Optionally, the traffic events comprise at least one of perception events, behavior events, and traffic flow events; the perception events comprise obstacle vehicle information and a proportion of an area of a potential vacant space in a range of a field of view; the behavior events comprise that an obstacle vehicle travels along a lane where the potential vacant space is located, and that a continuous obstacle vehicle queue travels along a lane where the potential vacant space is located; the traffic flow events comprise a probability of patency of a lane where the potential vacant space is located, and probabilities of patency of lanes adjacent to and in the same direction as a lane where the potential vacant space is located.

Optionally, the step of acquiring a proportion of an area of a potential vacant space in a range of a field of view comprises: obtaining a proportion of an area of a potential vacant space in a range of a field of view according to a location of the vehicle, a location where a sensor is mounted and a visible range of the sensor, and a location of the obstacle vehicle.

Optionally, the step of determining that an obstacle vehicle travels along a lane where the potential vacant space is located comprises: according to correlation between historical traces of obstacle vehicles and reference lines of the lane where the potential vacant space is located, obtaining a probability that a future traveling trace of an obstacle vehicle is in the lane where the potential vacant space is located.

Optionally, the step of acquiring a probability of patency of a lane where the potential vacant space is located comprises: according to a vehicle speed, the number of vehicles, and a road length of the lane where the potential vacant space is located, calculating the probability of patency of a lane where the potential vacant space.

Optionally, the establishing a Bayesian network according to a dependency relationship between a probability of occurrence of a traffic event and a probability of existence of a vacant space comprises: establishing a dependency relationship among the traffic events; and determining a joint probability among the traffic events to establish a Bayesian network.

Optionally, the establishing a dependency relationship among the traffic events comprises: establishing a dependency relationship among the traffic events according to a structural learning method for a Bayesian network.

Optionally, the determining a joint probability among the traffic events comprises: performing parameter learning for joint probability distribution of the traffic events according to a prior distribution model to obtain a joint probability among the traffic events.

The present application further provides a vehicle comprising a memory and a processor; wherein the memory stores a vacant space identification program, and the vacant space identification program, when being executed by the processor, implements the steps of the aforementioned vacant space identification method.

The present application further provides a computer storage medium, wherein the computer storage medium stores computer program instructions; and the computer program instructions, when being executed by a processor, implement the aforementioned vacant space identification method.

In summary, the vacant space identification method provided by the present invention is applied in a vehicle and comprises: acquiring traffic events around the vehicle; establishing a Bayesian network according to a dependency relationship between a probability of occurrence of a traffic event and a probability of existence of a vacant space; calculating a probability of existence of a vacant space around the vehicle according to the traffic events and the Bayesian network; and if the probability of existence of a vacant space is greater than a preset threshold, determining that a vacant space exists. The present application establishes a dependency relationship among probabilities of occurrence of different traffic events based on the Bayesian network, and outputs a probability of existence of an available space in a range that the fields of view of sensors of the vehicle cannot reach, thereby improving accuracy of identifying vacant spaces during autonomous driving.

The above description is only an overview of technical solutions of the present invention. In order that the technical means of the present invention can be understood more clearly, so that it can be implemented according to the content of the specification, and in order that the above and other purposes, features, and advantages of the present invention can be more obvious and easier to understand, preferred embodiments are given below, and are explained in detail below in accompany with the attached drawings.

### BRIEF DESCRIPTION OF THE DRAWINGS

FIG. 1 is a schematic view of perceiving a vacant space by an autonomous driving vehicle according to the prior art.
FIG. 2 is a schematic flow chart of a vacant space identification method shown according to an embodiment of the present invention.
FIG. 3 is a schematic view of determining a traveling trace of an obstacle vehicle shown according to an embodiment of the present invention.
FIG. 4 is a structural schematic view of a Bayesian network shown according to an embodiment of the present invention.

### DETAILED DESCRIPTION

In order to further elaborate the technical means adopted by the present invention to achieve predetermined invention purposes and effects thereof, the present invention is described in detail below in conjunction with the accompanying drawings and the preferred embodiments.

### First Embodiment

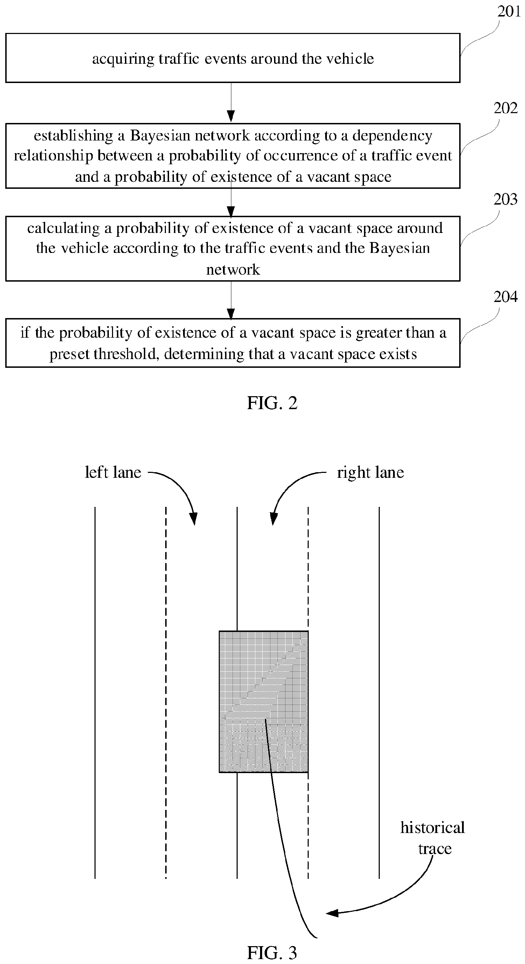

As shown in FIG. 2, an embodiment of the present invention provides a vacant space identification method. The vacant space identification method applied as shown in the first embodiment includes:
S201, acquiring traffic events around a vehicle.

Optionally, the traffic events include at least one of perception events, behavior events, and traffic flow events; the perception events include obstacle vehicle information and a proportion of an area of a potential vacant space in a range of a field of view; the behavior events include that an obstacle vehicle travels along a lane where the potential vacant space is located, and that a continuous obstacle vehicle queue travels along a lane where the potential vacant space is located; the traffic flow events include a probability of patency of a lane where the potential vacant space is located, and probabilities of patency of lanes adjacent to and in the same direction as a lane where the potential vacant space is located.

Among them, the perception events include obstacle vehicle information, which is obstacle vehicle information that can be detected according to various sensors (cameras, radars, etc.) of an autonomous driving vehicle, for example, the number of obstacle vehicles, positions of obstacle vehicles, etc. It is also possible to further obtain a proportion of an area of a potential vacant space in a range of a field of view according to the obstacle vehicle information. Specifically, first according to image information from cameras and based on deep learning, drivable regions and non-drivable regions are identified. Due to block of the obstacle vehicles, a potential vacant space may exist in a non-drivable region; it is possible to obtain a proportion of an area of the potential vacant space in a range of a field of view according to a position where the autonomous driving vehicle is located, mounting positions and visible ranges of sensors, and positions of obstacle vehicles.

Among them, the behavior events include that an obstacle vehicle travels along a lane where the potential vacant space is located, and that a continuous obstacle vehicle queue travels along a lane where the potential vacant space is located. The step of determining that an obstacle vehicle travels along a lane where the potential vacant space is located includes: according to correlation between historical traces of obstacle vehicles and reference lines of the lane where the potential vacant space is located, obtaining a probability that a future traveling trace of an obstacle vehicle is in the lane where the potential vacant space is located. As shown in FIG. 3, correlation between vehicles and lane reference lines is determined through historical traces of vehicles, that is, probabilities of vehicles entering a left lane and a right lane is judged through historical traces of vehicles. By numerical analysis, correlation between the historical traces of obstacle vehicles and the reference lines of the lane where the vacant space is located in the xyt three-dimensional space is estimated, thereby obtaining a probability that an obstacle vehicle travels along the lane where the potential vacant space is located. Similarly, when detecting a continuous obstacle vehicle queue, according to methods similar to above, a probability that each obstacle vehicle travels along the lane where the potential vacant space is located is respectively obtained by calculation, and a probability that a continuous obstacle vehicle queue travels along the lane where the potential vacant space is located is further obtained.

Among them, the traffic flow events include a probability of patency of a lane where the potential vacant space is located, and probabilities of patency of lanes adjacent to and in the same direction as a lane where the potential vacant space is located. Specifically, a traffic flow characteristic chart is a statistical status chart used to describe a traffic flow at a macro level, including a lane occupancy rate (how many vehicles per kilometer), traffic flow (how many passing vehicles per hour), and other data. According to a traffic flow characteristic chart of the lane where the potential vacant space is located, it is possible to obtain a vehicle speed, the number of vehicles, a road length, and other data of a current road, and further calculate a probability of patency of the lane where the potential vacant space is located. Similarly, it is possible to calculate probabilities of patency of lanes adjacent to and in the same direction as the lane where the potential vacant space is located according to the above method. The above traffic flow events can be used to determine whether the lane where the potential vacant space is located is more unobstructed than adjacent lanes by comparison, and estimate a probability of existence of a potential vacant space according to the comparison result. If the lane where the potential vacant space is located is more unobstructed than adjacent lanes, the probability of existence of a potential vacant space is larger.

Step S202, establishing a Bayesian network according to a dependency relationship between a probability of occurrence of a traffic event and a probability of existence of a vacant space.

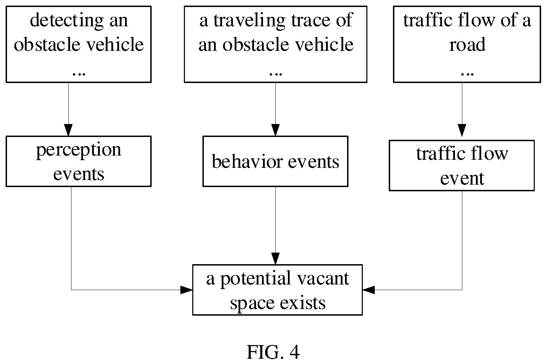

As shown in FIG. 4, for vacant spaces that are unable to be directly detected by sensors of the autonomous driving vehicle, a space obtained by calculation using clearance distances between obstacle vehicles can be regarded as a potential vacant space. A probability of existence of the potential vacant space is estimated through a joint probability of various traffic events, such as perception events, behavior events, and traffic flow events.

Optionally, the establishing a Bayesian network according to a dependency relationship between a probability of occurrence of a traffic event and a probability of existence of a vacant space includes: establishing a dependency relationship among the traffic events; and determining a joint probability among the traffic events to establish a Bayesian network.

Among them, the dependency relationship among the traffic events can be established according to a structural learning method for a Bayesian network, and the dependency relationship among the traffic events can also be established according to traffic experience.

Among them, parameters in joint probability distribution of calibration events are tested and iterated by means of machine learning. Calibration is performed using a data set driving method, and a joint probability among various traffic events is obtained according to training data. Specifically, parameter learning is performed on the joint probability distribution of traffic events according to a prior distribution model to obtain the joint probability among traffic events.

Specifically, traffic events of each node in the Bayesian network on which the present invention relies are defined above. The establishment of dependency relationships among different traffic events and the parameters in the joint probability distribution of each event are obtained through machine learning. For learning of the dependency relationships of events, a Bayesian network structure learning method is used. Each set of input data contains occurrence statuses of all defined traffic events in a certain specific scenario, and learning of dependency relationships is performing a maximum likelihood estimation to find a certain kind of network structure (relating manners among events) that maximizes a probability of occurrence of a given training data set. For learning of the joint probability distribution of each event, a specific network structure and a training data set are given, an appropriate prior distribution (β distribution, polynomial distribution, normal distribution, Poisson distribution) is selected, and parameters of the corresponding distribution are learned. After structure learning and parameter learning of the Bayesian network, complete network information is obtained.

Step S203, calculating a probability of existence of a vacant space around the vehicle according to the traffic events and the Bayesian network.

Step S204, if the probability of existence of a vacant space is greater than a preset threshold, determining that a vacant space exists.

Among them, if a probability of a potential vacant space is greater than a threshold, it is identified as a vacant space that can be utilized by an autonomous driving vehicle. The technical solution of the present invention can estimate the probability of existence of the potential vacant space based on historical traces (positions/speeds) of obstacle vehicles near vacant spaces and sensing abilities (sensing distances/visible ranges) of sensors, such that decisions for changing lanes or borrowing lanes of the autonomous driving vehicle is more in line with human expectations, thereby reducing the number of false triggers.

In the present invention, the space obtained by calculation among obstacle vehicles is regarded as a potential vacant space, a probability of existence of the potential vacant space is estimated, and the calculation process combines inherent perceiving abilities of sensors of the vehicle itself and historical trace information of obstacle vehicles in the environment. That is, if the autonomous driving vehicle has the ability to see the potential vacant space, information from sensors is partially believed; if the sensors have no ability to see the potential vacant space, selections of obstacle vehicles in the environment are partially believed: it is considered that the obstacle vehicles can make optimal decision and plan corresponding paths based on observed environment.

The vacant space identification method provided by this embodiment of the present invention is applied in a vehicle and comprises: acquiring traffic events around the vehicle; establishing a Bayesian network according to a dependency relationship between a probability of occurrence of a traffic event and a probability of existence of a vacant space; calculating a probability of existence of a vacant space around the vehicle according to the traffic events and the Bayesian network; and if the probability of existence of a vacant space is greater than a preset threshold, determining that a vacant space exists. The present application establishes a dependency relationship among probabilities of occurrence of different traffic events based on the Bayesian network, and outputs a probability of existence of an available space in a range that the fields of view of sensors of the vehicle cannot reach, thereby improving accuracy of identifying vacant spaces during autonomous driving.

The specific process of executing the above method steps in this embodiment is detailed in the relevant description of the above embodiment and will not be repeated here.

The present application further provides a vehicle including a memory and a processor; wherein the memory stores a vacant space identification program, and the vacant space identification program, when being executed by the processor, implements the steps of the aforementioned vacant space identification method.

An embodiment of the present invention further provides a readable storage medium, wherein the readable storage medium stores computer program instructions; and the computer program instructions, when being executed by a processor, implement the aforementioned vacant space identification method.

The specific process of executing the above method steps in this embodiment is detailed in the relevant description of the above embodiment and will not be repeated here.

The various technical features of the above embodiments can be combined in any way. In order to make the description be concise, all possible combinations of the various technical features in the above embodiments have not been described. However, as long as there is no contradiction existing in combinations of these technical features, they should be considered as being within the record scope of this specification.

In this specification, the terms "include", "comprise", or any other variation thereof are intended to encompass non-exclusive inclusion, in addition to including those listed elements, they may also include other elements not explicitly listed.

The above described are only specific implementations of the present invention, however, the protection scope of the present invention is not limited here. Any change or replacement that can be easily thought by technical personnel familiar with the technical field within the techinical field disclosed by the present invention should be covered by the protection scope of the present invention. Therefore, the protection scope of the present invention should be based on the protection scope of the claims.

## Claims

1. A vacant space identification method applied in a vehicle, comprising:
acquiring traffic events around the vehicle;
establishing a Bayesian network according to a dependency relationship between a probability of occurrence of a traffic event and a probability of existence of a vacant space;
calculating a probability of existence of a vacant space around the vehicle according to the traffic events and the Bayesian network; and
if the probability of existence of a vacant space is greater than a preset threshold, determining that a vacant space exists.

2. The vacant space identification method according to claim 1, wherein the traffic events comprise at least one of perception events, behavior events, and traffic flow events;
the perception events comprise obstacle vehicle information and a proportion of an area of a potential vacant space in a range of a field of view;
the behavior events comprise that an obstacle vehicle travels along a lane where the potential vacant space is located, and that a continuous obstacle vehicle queue travels along a lane where the potential vacant space is located;
the traffic flow events comprise a probability of patency of a lane where the potential vacant space is located, and probabilities of patency of lanes adjacent to and in the same direction as a lane where the potential vacant space is located.

3. The vacant space identification method according to claim 2, wherein the step of acquiring a proportion of an area of a potential vacant space in a range of a field of view comprises:
obtaining a proportion of an area of a potential vacant space in a range of a field of view according to a location of the vehicle, a location where a sensor is mounted and a visible range of the sensor, and a location of the obstacle vehicle.

4. The vacant space identification method according to claim 2, wherein the step of determining that an obstacle vehicle travels along a lane where the potential vacant space is located comprises:
according to correlation between historical traces of obstacle vehicles and reference lines of the lane where the potential vacant space is located, obtaining a probability that a future traveling trace of an obstacle vehicle is in the lane where the potential vacant space is located.

5. The vacant space identification method according to claim 2, wherein the step of acquiring a probability of patency of a lane where the potential vacant space is located comprises:
according to a vehicle speed, the number of vehicles, and a road length of the lane where the potential vacant space is located, calculating the probability of patency of a lane where the potential vacant space.

6. The vacant space identification method according to claim 1, wherein the establishing a Bayesian network according to a dependency relationship between a probability of occurrence of a traffic event and a probability of existence of a vacant space comprises:
establishing a dependency relationship among the traffic events; and
determining a joint probability among the traffic events to establish a Bayesian network.

7. The vacant space identification method according to claim 6, wherein the establishing a dependency relationship among the traffic events comprises:
establishing a dependency relationship among the traffic events according to a structural learning method for a Bayesian network.

8. The vacant space identification method according to claim 6, wherein the determining a joint probability among the traffic events comprises:
performing parameter learning for joint probability distribution of the traffic events according to a prior distribution model to obtain a joint probability among the traffic events.

9. A vehicle, wherein the vehicle comprises a memory and a processor; wherein the memory stores a vacant space identification program, and the vacant space identification program, when being executed by the processor, implements the steps of the vacant space identification method according to any one of claims 1-8.

10. A a readable storage medium, wherein the readable storage medium stores computer program instructions; and the computer program instructions, when being executed by a processor, implement the vacant space identification method according to any one of claims 1-8.
